(19) 

Europäisches
Patentamt
European
Patent Office
Office européen
des brevets

(11) **EP 4 622 197 A1**

(12) **EUROPEAN PATENT APPLICATION**
published in accordance with Art. 153(4) EPC

(43) Date of publication:
**24.09.2025 Bulletin 2025/39**

(21) Application number: **22966085.7**

(22) Date of filing: **22.11.2022**

(51) International Patent Classification (IPC):
**H04L 27/00** (2006.01)   **H04B 7/0456** (2017.01)

(52) Cooperative Patent Classification (CPC):
**H04B 7/0456; H04L 27/00**

(86) International application number:
**PCT/CN2022/133517**

(87) International publication number:
**WO 2024/108385 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **PENG, Xiaohui**
**Shenzhen, Guangdong 518129 (CN)**

• **LUO, Jiajin**
**Shenzhen, Guangdong 518129 (CN)**
• **ZHOU, Baojian**
**Shenzhen, Guangdong 518129 (CN)**
• **YAN, Min**
**Shenzhen, Guangdong 518129 (CN)**
• **YANG, Xun**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **METHOD AND APPARATUS USED FOR COMMUNICATION, STORAGE MEDIUM, PROGRAM PRODUCT, AND COMMUNICATION SYSTEM**

(57)     Embodiments of this disclosure provide a communication method, a communication apparatus, a computer-readable storage medium, a computer program product, and a communication system. In the method, when receiving beam mismatch information generated by a second apparatus, a first apparatus determines a second precoding matrix based on at least one column vector of a first precoding matrix; the first apparatus performs a second precoding operation on a second to-be-encoded signal based on the second precoding matrix, to obtain a second precoded signal; and the first apparatus sends the second precoded signal to the second apparatus. In this way, under a condition of beam mismatch, the precoding matrix can be quickly adjusted, to ensure matching between the precoding matrix and a channel environment. In addition, the precoding matrix may continuously change, and this improves precision of the precoding matrix, and improves transmission efficiency.

FIG. 2A

**EP 4 622 197 A1**

## Description

## TECHNICAL FIELD

This disclosure generally relates to the field of telecommunication, and more specifically, to a communication method and apparatus, a storage medium, a program product, and a communication system.

## BACKGROUND

For a wireless communication system, channel quality greatly affects communication performance. A transmitted signal needs to adapt to a current channel state, so that optimal communication performance can be achieved.

A conventional communication system usually obtains current channel state information (Channel State Information, CSI) by using a channel state information-reference signal (Channel State Information-Reference Signal, CSI-RS). After the information is obtained, a modulation and coding scheme (Modulation and Coding Scheme, MCS) is further scheduled and a resource block (Resource Block, RB) is further allocated based on the channel quality, and beamforming is performed to support multi-user multi-input multi-output (Multi-user Multi-input multi-output, MU MIMO), to improve a communication rate. However, both the CSI-RS and CSI feedback require resource overheads, and this occupies a resource used for communication and reduces communication efficiency. In addition, CSI feedback precision is limited. To reduce the overheads of the CSI feedback, feedback is generally performed in a codebook manner, resulting in a loss of channel measurement precision.

## SUMMARY

This application provides a communication technical solution for channel measurement and precoding. The channel measurement and precoding can be performed based on apparatus information and an environment, and adaptive adjustment can be performed when a channel state changes. In this way, signaling overheads of a CSI-RS and signaling overheads of CSI feedback are reduced, and high-precision channel measurement and precoding are implemented when a channel changes.

According to a first aspect, a communication method is provided. The method is executed by a first apparatus. The first apparatus may be a network device, or may be a chip used in the network device. In the method, when receiving beam mismatch information generated by a second apparatus, the first apparatus determines a second precoding matrix based on at least one column vector of a first precoding matrix. Further, the first apparatus performs a second precoding operation on a second to-be-encoded signal based on the second precoding matrix, to obtain a second precoded signal.

Further, the first apparatus sends the second precoded signal to the second apparatus. In this way, under a condition of beam mismatch, the precoding matrix can be quickly adjusted, to ensure matching between the precoding matrix and a channel environment, and improve communication transmission efficiency. In addition, the precoding matrix may continuously change, and this improves precision of the precoding matrix, and improves transmission efficiency, in comparison with a conventional discrete precoding matrix.

It may be understood that, the first apparatus may alternatively be a terminal device or a chip in the terminal device. Further, a beam may be, for example, a beam sent by the first apparatus to a network device, or may be a beam sent by the first apparatus to another terminal device in a scenario such as sidelink (Sidelink, SL) communication or a self-organizing network. This is not limited in this disclosure. The network device below may be deduced by analogy. Details are not described herein in this disclosure.

In some implementations, the first apparatus further performs a first precoding operation on a first to-be-encoded signal based on the first precoding matrix, to obtain a first precoded signal. Further, the first apparatus sends the first precoded signal to the second apparatus, where the first precoding matrix is determined based on information about the first apparatus, information about the second apparatus, and environment information. In this way, the first precoding matrix does not need to be calculated by using a CSI-RS reference signal, so that overheads of the CSI-RS and overheads of CSI feedback can be effectively reduced. Environment sensing is performed based on the information about the first apparatus, the information about the second apparatus, the environment information, and the like, to accurately calculate the first precoding matrix. The precoding matrix is not limited to a codebook-based discrete precoding matrix and may continuously change, and this can improve precision of the precoding matrix, and improve transmission efficiency, in comparison with the conventional codebook-based discrete precoding matrix.

In some implementations, that the first apparatus determines a second precoding matrix based on at least one column vector of a first precoding matrix includes: The first apparatus sends at least one test signal to the second apparatus based on the column vector of the first precoding matrix. Further, the first apparatus receives feedback information that corresponds to the test signal and that is from the second apparatus. Further, the first apparatus generates the second precoding matrix based on the feedback information. In this way, detection can be separately performed on statuses of paths on a channel. The second precoding matrix is conveniently and accurately calculated by using the existing first precoding matrix, to maintain dynamic matching between the second precoding matrix and the channel, and improve transmission efficiency.

In some implementations, that the first apparatus sends at least one test signal based on the column vector of the first precoding matrix includes: The first apparatus sequentially sends, based on a plurality of column vectors of the first precoding matrix to the second apparatus, a plurality of test signals corresponding to the plurality of column vectors. In this way, accurate detection can be performed on the paths on the channel one by one.

In some implementations, that the first apparatus sends at least one test signal based on the column vector of the first precoding matrix includes: The first apparatus generates, based on a plurality of column vectors of the first precoding matrix by using an orthogonal signal, one test signal corresponding to the plurality of column vectors. Further, the first apparatus sends the test signal to the second apparatus. In this way, detection can be simultaneously performed on a plurality of paths on the channel, to improve detection efficiency.

In some implementations, the orthogonal signal includes at least one of the following: a code division signal; or a frequency division signal. In this way, detection can be simultaneously performed on the plurality of paths on the channel in a flexible manner, to improve the detection efficiency.

In some implementations, the feedback information includes at least one of the following: a signal-to-noise ratio of a first test signal; a normalized value of the signal-to-noise ratio of the first test signal; an index of a column vector corresponding to a first test signal with a high signal-to-noise ratio; the column vector corresponding to the first test signal with the high signal-to-noise ratio; or relative receive power of a column vector corresponding to a first test signal, where the first test signal is related to the column vector, and the at least one test signal includes the first test signal. In this way, test results of the plurality of paths may be flexibly fed back in a plurality of manners, and different resource overheads are used, for being applicable to different application scenarios.

In some implementations, the communication method satisfies at least one of the following features: The information about the first apparatus includes at least one of location information and antenna array information that are of the first apparatus; the information about the second apparatus includes at least one of location information and antenna array information that are of the second apparatus; or the environment information includes at least one of an environment map and an environmental electromagnetic parameter. In this way, the first precoding matrix can be obtained through accurate calculation based on the information about the first apparatus, the information about the second apparatus, and the environment information, to reduce the resource overheads of the CSI-RS and the resource overheads of the CSI feedback, and ensure calculation accuracy.

In some implementations, the second precoding operation by the first apparatus includes: The first apparatus corrects the second precoding matrix to determine a third precoding matrix. Further, the first apparatus performs a second precoding operation on the signal based on the third precoding matrix. In this way, the precoding matrix can be optimized, to further improve the transmission efficiency.

In some implementations, that the first apparatus corrects the second precoding matrix includes: The first apparatus weights a column of the second precoding matrix based on at least one of the following: receive power of a test signal corresponding to the column of the second precoding matrix; or a received signal-to-noise ratio of the test signal corresponding to the column of the second precoding matrix. In this way, a strong path on the channel can be fully used for optimizing the precoding matrix, to further improve the transmission efficiency.

According to a second aspect, a communication method is provided. The method is executed by a second apparatus. The second apparatus may be a terminal device, or may be a chip used in the terminal device. In the method, the second apparatus sends beam mismatch information to a first apparatus, where the beam mismatch information is obtained by checking a first precoded signal obtained by performing a first precoding operation based on a first precoding matrix. Further, the second apparatus receives a second precoded signal from the first apparatus, where the second precoded signal is obtained through encoding based on a second precoding matrix, and the second precoding matrix is determined based on at least one column vector of the first precoding matrix. In this way, dynamic detection can be performed on mismatch between a beam and a channel, and the signal obtained through encoding based on the second precoding matrix that is adjusted based on a channel environment is received, to maintain matching between the precoding matrix and the channel, and improve transmission efficiency.

It may be understood that, the second apparatus may alternatively be a network device or a chip in the network device. Further, the beam may be, for example, a beam received by the second apparatus from a terminal device, or may be a beam received by the second apparatus from another network device in a scenario such as relay (Relay). This is not limited in this disclosure. The terminal device below may be deduced by analogy. Details are not described herein in this disclosure.

In some implementations, the checking the first precoded signal includes at least one of the following: Data of the first precoded signal is incorrect, and a power change of the signal received by the second apparatus from the first apparatus is greater than a first threshold; or a data error probability of the first precoded signal is greater than a second threshold. In this way, beam mismatch can be obtained through accurate detection, to avoid impact of random interference, and maintain matching between the precoding matrix and the channel as much as possible.

In some implementations, the second apparatus further receives at least one test signal from the first apparatus. Further, the second apparatus sends feedback information based on the at least one test signal. In this way, detection is performed on a plurality of paths on the channel via the test signal based on the feedback information, to facilitate the first apparatus in adjusting the precoding matrix, and maintain matching between the precoding matrix and the channel.

In some implementations, the feedback information includes at least one of the following: a signal-to-noise ratio of a first test signal; a normalized value of the signal-to-noise ratio of the first test signal; an index of a column vector corresponding to a first test signal with a high signal-to-noise ratio; the column vector corresponding to the first test signal with the high signal-to-noise ratio; or relative receive power of a column vector corresponding to a first test signal, where the first test signal is related to the column vector, and the at least one test signal includes the first test signal. In this way, test results of the plurality of paths may be flexibly fed back in a plurality of manners, and different resource overheads are used, for being applicable to different application scenarios.

In some implementations, the test signal is generated from an orthogonal signal. In this way, detection can be simultaneously performed on the plurality of paths on the channel in a flexible manner, to improve detection efficiency.

According to a third aspect, an embodiment of this application further provides a communication apparatus. The communication apparatus may be used in the first apparatus according to the first aspect. The apparatus may be a terminal device or a network device, may be an apparatus (for example, a chip, a chip system, or a circuit) in the terminal device or the network device, or may be an apparatus that can be used together with the terminal device or the network device.

In a possible implementation, the communication apparatus may include one-to-one corresponding modules or units to perform the methods/operations/steps/actions described in the first aspect. The module or the unit may be a hardware circuit, may be software, or may be implemented by a hardware circuit in combination with software.

In a possible implementation, the communication apparatus may include a processing unit and a transceiver unit. The processing unit is configured to: determine a second precoding matrix based on at least one column vector of a first precoding matrix; and perform a second precoding operation on a second to-be-encoded signal based on the second precoding matrix, to obtain a second precoded signal. The transceiver unit is configured to: receive beam mismatch information generated by a second apparatus; and send the second precoded signal to the second apparatus.

According to a fourth aspect, an embodiment of this application further provides a communication apparatus. The communication apparatus may be used in the second apparatus according to the second aspect. The apparatus may be a terminal device or a network device, may be an apparatus (for example, a chip, a chip system, or a circuit) in the terminal device or the network device, or may be an apparatus that can be used together with the terminal device or the network device.

In a possible implementation, the communication apparatus may include one-to-one corresponding modules or units to perform the methods/operations/steps/actions described in the second aspect. The module or the unit may be a hardware circuit, may be software, or may be implemented by a hardware circuit in combination with software.

In a possible implementation, the communication apparatus may include a processing unit and a transceiver unit. The processing unit is configured to: obtain beam mismatch information obtained by checking a first precoded signal obtained by performing a first precoding operation based on a first precoding matrix. The transceiver unit is configured to: send the beam mismatch information to a first apparatus; and receive a second precoded signal from the first apparatus. The second precoded signal is obtained through encoding based on a second precoding matrix, and the second precoding matrix is determined based on at least one column vector of the first precoding matrix.

According to a fifth aspect, a communication apparatus is provided. The communication apparatus may be the network device in the foregoing method embodiments, or may be a chip arranged in the network device. The communication apparatus includes a processor and a memory. The memory is configured to store a computer program or instructions. When the processor executes the computer program or the instructions, the communication apparatus is caused to perform the method performed by the terminal device in the foregoing method embodiments.

According to a sixth aspect, a communication apparatus is provided. The communication apparatus may be the terminal device in the foregoing method embodiments, or a chip arranged in the terminal device. The communication apparatus includes a processor and a memory. The memory is configured to store a computer program or instructions. When the processor executes the computer program or the instructions, the communication apparatus is caused to perform the method performed by the terminal device in the foregoing method embodiments.

According to a seventh aspect, this application provides a computer-readable storage medium, where the computer-readable storage medium stores a computer program. When the computer program is run, the method performed by the terminal device or the network device in the foregoing aspects is implemented.

According to an eighth aspect, a computer program product is provided, where the computer program product includes computer program code. When the computer program code is run, the method performed by the terminal device or the network device in the foregoing aspects is caused to be performed.

According to a ninth aspect, a communication system is provided. The communication system includes: a first apparatus and a second apparatus, where the first apparatus performs the method performed by the network device in the foregoing method embodiments; and the second apparatus performs the method performed by the terminal device in the foregoing method embodiments.

**BRIEF DESCRIPTION OF DRAWINGS**

FIG. 1A shows a scenario in which communication during which a signal path is not blocked may be implemented according to an embodiment of this application;

FIG. 1B shows a scenario in which communication during which a signal path is blocked may be implemented according to an embodiment of this application;

FIG. 2A is a diagram of a procedure of channel estimation and precoding according to an embodiment of this application;

FIG. 2B is a diagram of a procedure of channel estimation and precoding when a beam is normal according to an embodiment of this application;

FIG. 2C-1 and FIG. 2C-2 are diagrams of a procedure that is of channel estimation and precoding and that includes beam mismatch according to an embodiment of this application;

FIG. 3 is a flowchart of a communication method implemented at a first apparatus according to an embodiment of this application;

FIG. 4 is a flowchart of a communication method implemented at a second apparatus according to an embodiment of this application;

FIG. 5 is a simplified block diagram of an example device in a possible implementation according to an embodiment of this application;

FIG. 6 is a simplified block diagram of a communication apparatus in a possible implementation according to an embodiment of this application; and

FIG. 7 is a simplified block diagram of a network device in a possible implementation according to an embodiment of this application.

**DESCRIPTION OF EMBODIMENTS**

To make objectives, technical solutions, and advantages of this application clearer, the following further describes in detail this application with reference to accompanying drawings. Specific operation methods, function descriptions, and the like in method embodiments may also be applied to apparatus embodiments or system embodiments.

In recent years, a wireless sensing technology attracts extensive attention in academia. In the wireless sensing technology, a characteristic of a signal propagation space (channel) is obtained by analyzing a change of a radio signal during propagation, to implement scenario sensing. A scenario herein includes both a moving object (for example, a vehicle) and a static object (for example, a building or a street). Radar is a classic wireless sensing means. A basic principle of radar is that a transmitter transmits a specific waveform signal, the signal passes through a wireless channel and then is received by a receiver, and signal processing is performed based on the transmitted signal and the received signal, to extract a target that is of interest and that is from the wireless channel.

A main function of a wireless communication system is to exchange information between a receiver and a transmitter. A basic principle of the wireless communication system is also that a specific waveform signal is transmitted from a transmit end, the signal is received by the receiver after passing through a wireless channel, and after signal processing, the signal transmitted by the transmitter is obtained through demodulation. From a whole physical process of transmitting, conveying, and receiving, processes of radar and wireless communication are very similar. How to implement integration of wireless communication and the sensing technology (represented by radar), for sensing an ambient environment when communication is implemented, has become a hot topic of current research. When a base station has a sensing function, how to use the sensing function to assist in communication, for improving communication performance or saving resource overheads (for example, reducing overheads of beam scanning), is a very valuable research problem.

For the wireless communication system, channel quality greatly affects communication performance. A transmitted signal needs to adapt to a current channel state, so that optimal communication performance can be achieved. For example, when the channel quality is poor, a signal with a very high modulation order is sent from a transmit end, and after the signal passes through a channel, a high bit error rate occurs in demodulation at a receive end. Consequently, communication efficiency is reduced.

To improve overall performance of the wireless system, it is necessary to ensure that configuration of the sent signal adapts to the current channel state. In an implementation, current CSI information needs to be first obtained. After the information is obtained, an MCS is further scheduled and an RB resource is further allocated based on the channel quality, and beamforming is performed to support multi-user multiplexing MU MIMO, to improve a communication rate. In communication technologies represented by 5G cellular and Wi-Fi 6, channel estimation is performed by using the CSI, and sending configuration of the signal at the transmit end is further adjusted based on estimation information.

In an example of 5G new radio (New Radio, NR), a framework for performing channel measurement and precoding based on the CSI mainly includes: (1) A network device sends a CSI-RS. (2) A terminal device measures the CSI-RS, including the channel measurement and interference measurement. (3) The terminal device reports a CSI feedback result, and a base station performs related scheduling processing. The reported CSI feedback result includes a rank indicator (Rank Indicator, RI), a precoding matrix indicator (Precoding Matrix Indicator, PMI), a channel quality indicator (Channel Quality Indicator, CQI), and the like. The scheduling processing by the network device is related to a specific implementation algorithm. For example, after obtaining the information, the network device schedules the modulation and coding scheme (Modulation and Coding Scheme, MCS) and allocates the resource block (Resource Block, RB) based on the CSI feedback result, and performs beamforming to support multi-user multi-input multi-output (Multi-user Multi-input multi-output, MU MIMO), and the like, to improve the communication rate.

A conventional manner of performing channel state measurement and precoding based on the CSI has the following disadvantages: (1) Resource overheads of the CSI-RS are required: When channel measurement is performed based on the CSI, the CSI-RS reference signal needs to be additionally configured, which occupies a resource used for communication and reduces communication efficiency. (2) Overheads of the CSI feedback are required: The CSI feedback also needs to occupy the resource for communication, and this reduces communication efficiency. (3) CSI feedback precision is limited: To save the overheads of the CSI feedback, feedback is generally performed in a codebook manner, that is, a receive party and a transmit party agree on a codebook, and different codebooks correspond to different precoding matrices. Consequently, the precoding matrix can be selected only from a limited quantity of preset matrices, but a real channel state continuously changes, resulting in a loss of channel measurement precision.

In view of this, an embodiment disclosed in this application provides a communication method for channel measurement and precoding. In the method, when receiving beam mismatch information generated by a second apparatus, a first apparatus determines a second precoding matrix based on at least one column vector of a first precoding matrix. Further, the first apparatus performs a second precoding operation on a second to-be-encoded signal based on the second precoding matrix, to obtain a second precoded signal. Further, the first apparatus sends the second precoded signal to the second apparatus. In this way, under a condition of beam mismatch, the precoding matrix can be quickly adjusted, to ensure matching between the precoding matrix and a channel environment, and improve communication transmission efficiency. In addition, the precoding matrix is not limited to a codebook-based discrete precoding matrix and may continuously change, and this improves precision of the precoding matrix, and improves transmission efficiency, in comparison with the conventional codebook-based discrete precoding matrix.

It may be understood that, the first apparatus in the foregoing communication method may be a network device or a chip in the network device, or may be a terminal device or a chip in the terminal device. Further, a beam may be a beam sent by the first apparatus to a terminal, may be a beam sent by the first apparatus to a network device, or may be a beam sent by the first apparatus to another terminal device in a scenario such as sidelink (Sidelink, SL) communication or a self-organizing network. This is not limited in this disclosure. The network device below may be deduced by analogy. Details are not described herein in this disclosure.

An embodiment disclosed in this application further provides a communication method for channel measurement and precoding. In the method, a second apparatus sends beam mismatch information to a first apparatus, where the beam mismatch information is obtained by checking a first precoded signal obtained by performing a first precoding operation based on a first precoding matrix. Further, the second apparatus receives a second precoded signal from the first apparatus, where the second precoded signal is obtained through encoding based on a second precoding matrix, and the second precoding matrix is determined based on at least one column vector of the first precoding matrix. In this way, dynamic detection can be performed on mismatch between a beam and a channel, and the signal obtained through encoding based on the second precoding matrix that is adjusted based on a channel environment is received, to maintain matching between the precoding matrix and the channel, and improve transmission efficiency.

It may be understood that, the communication method may alternatively be executed by a terminal device or a chip in the terminal device. Further, the beam may be a beam received by the second apparatus from a network device. The communication method may alternatively be executed by a network device or a chip in the network device. Further, the beam may be a beam received by the second apparatus from a terminal device, or may be a beam received by the second apparatus from another network device in a scenario such as relay (Relay). This is not limited in this disclosure. The terminal device below may be deduced by analogy. Details are not described herein in this disclosure.

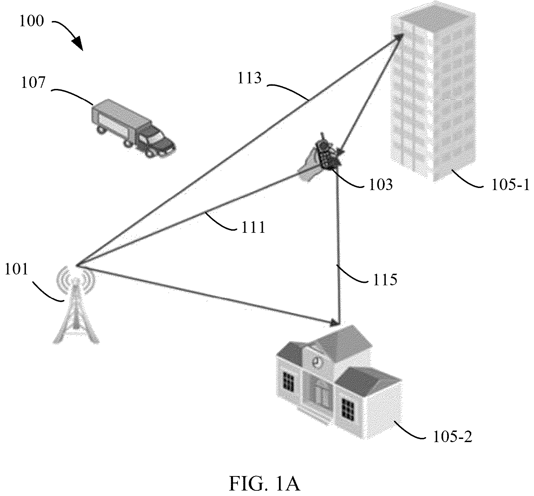

FIG. 1A shows a scenario in which communication during which a signal path is not blocked may be implemented according to an embodiment of this application. In a scenario 100, a first apparatus 101, for example, a network device, and a second apparatus 103, for example, a terminal device, are included. In the scenario 100, environmental elements such as buildings 105-1 and 105-2 are further included. A direct communication path 111 and reflective communication paths 113 and 115 exist between the network device 101 and the terminal device 103. A moving target 107, for example, a vehicle, does not block the communication paths between the network device 101 and the terminal device 103.

The network device 101 has a sensing function, and can obtain sensing data of an ambient environment. The network device 101 obtains ambient environment information through sensing, for example, environment information of a 3D structure of a fixed object such as a building, a utility pole, or a tree, and environmental electromagnetic parameter information such as a dielectric constant, a refractive index, and a reflectivity that are caused by material information. The network device 101 may further obtain information about a base station, for example, location information of the base station, and antenna array information of the base station such as a quantity, dimensions, orientations, and patterns that are of antennas. The network device 101 may further obtain information about a terminal, for example, location information of the terminal, and antenna array information of the terminal such as a quantity, dimensions, orientations, and patterns that are of antennas. The network device 101 may calculate channel information between the network device 101 and the terminal device 103 or perform channel estimation based on the environment information, the information about the base station, and the information about the terminal by using an electromagnetic calculation method or a ray tracing method. The network device 101 determines a first precoding matrix based on the channel information, performs a precoding operation on a sent signal based on the first precoding matrix, and sends a precoded signal. In this way, a CSI-RS reference signal does not need to be used, and overheads of the CSI-RS and overheads of CSI feedback can be effectively reduced. The channel estimation may be performed based on an environment sensing result. The precoding matrix may continuously change, and dynamic tracking may be performed based on the location information of the terminal and the antenna array information of the terminal. This can improve precision of the precoding matrix, in comparison with a conventional codebook-based discrete precoding matrix.

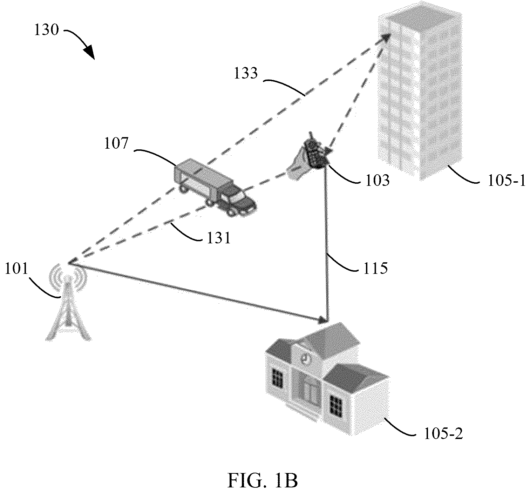

FIG. 1B shows a scenario in which communication during which a signal path is blocked may be implemented according to an embodiment of this application. In the scenario 100, same environmental elements as those in FIG. 1A: a first apparatus 101, for example, a network device, a second apparatus 103, for example, a terminal, and buildings 105-1 and 105-2, are included.

Because a moving target 107, for example, a vehicle, moves, this causes blocking to communication paths 111 and 113 between the network device 101 and the terminal device 103. Consequently, blocked paths 131 and 133 are formed. The network device 101 and the terminal device 103 detect a change of a channel environment, determine a second precoding matrix based on a first precoding matrix, perform a precoding operation on a sent signal based on the second precoding matrix, and send a precoded signal. In this way, a channel change caused by path blocking can be tracked, to maintain accuracy of the precoding matrix.

It should be understood that, in this embodiment of this disclosure, the moving target 107 that causes blocking to the communication path may be the vehicle, or may alternatively be another moving object, for example, a human body. This is not limited in this disclosure.

It should be understood that, the foregoing wireless communication scenario is not only applicable to a high-frequency scenario (above 6G), for example, a millimeter wave, but also applicable to a low-frequency scenario (sub 6G). The technical solutions of this application may be applied to a cellular system related to a 3rd generation partnership project (3rd generation partnership project, 3GPP), such as a 4th generation (4th generation, 4G) communication system, for example, a long term evolution (long term evolution, LTE) system, or a 5th generation (5th generation, 5G) communication system, for example, a new radio (new radio, NR) system, or may be applied to a wireless fidelity (wireless fidelity, Wi-Fi) system, a communication system that supports convergence of a plurality of wireless technologies, or a communication system evolved after 5G, for example, a 6th generation (6th generation, 6G) communication system.

The terminal device 103 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, terminal equipment, or the like. The terminal device 103 may alternatively be a communication chip having a communication module, may be a vehicle having a communication function, may be a vehicle-mounted device (for example, a vehicle-mounted communication apparatus or a vehicle-mounted communication chip), or the like. The terminal device 103 may have a wireless transceiver function. The terminal device can perform communication (for example, wireless communication) with one or more network devices in one or more communication systems, and accepts a network service provided by the network device. The network device herein includes but is not limited to the network device (101) shown in the figure. The terminal device 103 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, an unmanned aerial vehicle, a terminal apparatus in a 5G network, a terminal apparatus in a further evolved PLMN network, or the like. The terminal device 103 may be specifically a mobile phone (mobile phone), a tablet computer (pad), a computer with a wireless transceiver function, a smart point of sale (point of sale, POS) machine, customer-premises equipment (customer-premises equipment, CPE), a vehicle to everything (vehicle to everything, V2X) terminal, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. In addition, the terminal device 103 may be deployed on land, including an indoor terminal device or an outdoor terminal device, a handheld terminal device, or a vehicle-mounted terminal device; the terminal device 110 may be deployed on a water surface (for example, on a ship); or the terminal device 103 may be deployed in air (for example, on an aircraft, a balloon, or a satellite).

The network device (101) may be an access network device (also referred to as an access network site). The access network device is a device that provides a network access function, for example, a radio access network (radio access network, RAN) base station. The network device (101) may specifically include a base station (base station, BS), or include a base station, a radio resource management device configured to control the base station, and the like. The network device (101) may further include a relay station (relay device), an access point, a base station or an NR base station in a 5G network, a base station in a future evolved PLMN network, and the like. The network device (101) may be a wearable device or a vehicle-mounted device. Alternatively, the network device (101) may be a communication chip having a communication module.

For example, the network device (101) includes but is not limited to: a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a home base station (for example, a home evolved NodeB, or a home NodeB, HNB), a baseband unit (baseband unit, BBU), a transmission reception point (transmission reception point, TRP), a transmission point (transmission point, TP), a mobile switching center, a remote radio unit (Remote Radio Unit, RRU), a radio head (Radio Head, RH), a remote radio head (Remote Radio Head, RRH), an integrated access and backhaul (Integrated Access and Backhaul, IAB) node, a low-power node, such as a femto node, a pico node, a reconfigurable intelligent surface (Reconfigurable Intelligent Surface, RIS), a network-controlled repeater, and a device that functions as a base station in unmanned aerial vehicle communication, device-to-device (Device-to-Device, D2D) communication, vehicle-to-everything (vehicle-to-everything, V2X) communication, machine-to-machine (machine-to-machine, M2M) communication, and the like, may be an access network device in a future evolved PLMN network, or may be a wearable device or a vehicle-mounted device.

In some deployments, the network device may include a central unit (central unit, CU) and a distributed unit (distributed unit, DU). The network device may further include an active antenna unit (active antenna unit, AAU). It may be understood that, the network device may be a device including one or more of a CU node, a DU node, and an AAU node. In addition, the CU may be divided into a network device in an access network (radio access network, RAN), or the CU may be divided into a network device in a core network (core network, CN). This is not limited in this application.

In addition, the network device (101) may be connected to a core network (core network, CN) device, and the core network device may be configured to provide a core network service for the access network device (101) and the terminal device (103).

Both a receive party and a transmit party of the communication system may send and receive data in a multi-input multi-output manner. It is assumed that, for example, a quantity of antennas corresponding to the first apparatus 101 and a quantity of antennas corresponding to the second apparatus 103 are respectively M and N, a sent signal transmitted by the antenna corresponding to the first apparatus 101 is x, a received signal received by the antenna corresponding to the second apparatus 103 is y, and a channel matrix is H. In this case, a relationship between the received signal and the transmitted signal may be expressed as follows.

$$y = \mathbf{H}x$$

When the first apparatus 101 learns of channel information, the first apparatus 101 may perform signal precoding at the second apparatus 103, dynamically perform power control and phase adjustment based on the channel information, so that a signal is more directional rather than simply radiates around, and power of the signal received by the terminal device is enhanced. This avoids energy waste, and improves energy efficiency of the communication system. Alternatively, the signal processing is performed by the first apparatus 101 at a transmit end, so that the second apparatus 103 at a receive end can avoid complex signal processing. Specifically, when the first apparatus 101 has learned of the channel matrix H, the first apparatus 101 may perform SVD decomposition (Singular Value Decomposition) on the channel matrix H.

$$\mathbf{H} = \mathbf{U}\mathbf{\Sigma}\mathbf{V}^{H}$$

After the SVD decomposition on the channel matrix is performed, the first apparatus 101 may perform a precoding operation on the sent signal, and send the signal out, that is,

$$y = \mathbf{HWz}, \text{ and } x = \mathbf{Wz}$$

W indicates a first precoding matrix. The following expression may be obtained by setting the first precoding matrix W to a matrix V:

$$y = \mathbf{U\Sigma V}^H \mathbf{Vz}$$

Because V is an orthogonal matrix, the foregoing expression may be simplified as:

$$y = \mathbf{U\Sigma z}$$

U is an orthogonal matrix of N×N, and Σ is a diagonal matrix of N×M. Values on a diagonal are arranged in descending order.

If a quantity of streams that can be independently transmitted in a space corresponding to the channel matrix H is K, K needs to be less than or equal to min(M, N), and a dimension of the sent signal x may be referred to as the quantity of streams. After a first precoding operation in which $x = \mathbf{Wz}$, signals of the K streams are mapped onto M antennas, and a dimension of the first precoding matrix is M×K. Precoding is a specific implementation of a beamforming algorithm, and the first precoding operation is written in the following form:

$$x = \mathbf{Wz} = \sum_{k=1}^{K} w_k z_k$$

x indicates the signal sent through the antenna. The foregoing formula may indicate that the first apparatus 101 sends signal beams in K directions, and each column $w_k$ in the first precoding matrix W corresponds to one beam direction.

In this embodiment of this disclosure, an appropriate first precoding matrix W may be designed without using a CSI-RS and CSI feedback and without using a codebook, to save a resource for communication and perform accurate measurement on a channel. A specific procedure is described as follows.

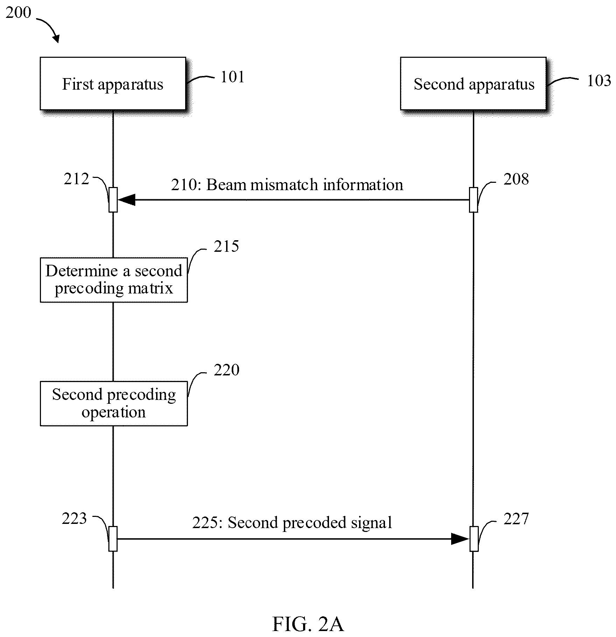

FIG. 2A is a diagram of a procedure 200 of channel estimation and precoding according to an embodiment of this application.

In the procedure 200, a second apparatus 103 sends (208) beam mismatch information 210 to a first apparatus 101; and correspondingly, the first apparatus 101 receives (212) the beam mismatch information 210 from the second apparatus 103. The beam mismatch information 210 may be obtained by checking, by the second apparatus 103, a first precoded signal obtained by performing a first precoding operation based on a first precoding matrix. When receiving the beam mismatch information 210, the first apparatus 100 determines (215) a second precoding matrix based on at least one column vector of the first precoding matrix. The first apparatus 101 performs a second precoding operation (220) on a second to-be-encoded signal based on the second precoding matrix, to obtain a second precoded signal. Further, the first apparatus 101 sends (223) the second precoded signal 225 to the second apparatus 103. In this way, under a condition of beam mismatch, the precoding matrix can be quickly adjusted, to ensure matching between the precoding matrix and a channel environment, and improve communication transmission efficiency. In addition, the precoding matrix is not limited to a codebook-based discrete precoding matrix and may continuously change, and this improves precision of the precoding matrix, and improves transmission efficiency, in comparison with the conventional codebook-based discrete codebook precoding matrix.

**In** this embodiment of this disclosure, the first apparatus 101 further performs, based on the first precoding matrix, the first precoding operation on a first to-be-encoded signal to be sent to the second apparatus 103, to obtain the first precoded signal. Further, the first apparatus 101 sends, to the second apparatus 103, the signal obtained by performing the first precoding operation, where the first precoding matrix is determined based on information about the first apparatus 101, information about the second apparatus 103, and environment information. In this way, the first precoding matrix does not need to be calculated by using a CSI-RS reference signal, so that overheads of the CSI-RS and overheads of CSI feedback can be effectively reduced. Environment sensing is performed based on the information about the first apparatus 101, the information about the second apparatus 103, the environment information, and the like, to accurately calculate the first precoding matrix. The precoding matrix is not limited to the codebook-based discrete precoding matrix and may continuously change, and this can improve the precision of the precoding matrix, and improve the transmission efficiency, in comparison with the conventional codebook-based discrete precoding matrix.

In this embodiment of this disclosure, that the first apparatus 101 determines the second precoding matrix based on the at least one column vector of the first precoding matrix includes: The first apparatus 101 sends at least one test signal to the second apparatus 103 based on the column vector of the first precoding matrix. Further, the first apparatus 101 receives feedback information that corresponds to the test signal and that is from the second apparatus 103. Further, the first apparatus 101 generates the second precoding matrix based on the feedback information. In this way, detection can be separately performed on statuses of paths on a channel. The second precoding matrix is conveniently and accurately calculated by using the existing first precoding matrix, to maintain dynamic matching between the second precoding matrix and the channel, and improve the transmission efficiency.

In this embodiment of this disclosure, that the first apparatus 101 sends the at least one test signal based on the column vector of the first precoding matrix includes: The first apparatus 101 sequentially sends, based on a plurality of column vectors of the first precoding matrix to the second apparatus 103, a plurality of test signals corresponding to the plurality of column vectors. In this way, accurate detection can be performed on the paths on the channel one by one.

In this embodiment of this disclosure, that the first apparatus 101 sends the at least one test signal based on the column vector of the first precoding matrix includes: The first apparatus 101 generates, based on a plurality of column vectors of the first precoding matrix by using an orthogonal signal, one test signal corresponding to the plurality of column vectors. Further, the first apparatus 101 sends the test signal to the second apparatus. In this way, detection can be simultaneously performed on a plurality of paths on the channel, to improve detection efficiency.

In this embodiment of this disclosure, the orthogonal signal includes at least one of the following: a code division signal; or a frequency division signal. In this way, detection can be simultaneously performed on the plurality of paths on the channel in a flexible manner, to improve the detection efficiency.

In this embodiment of this disclosure, the feedback information includes at least one of the following: a signal-to-noise ratio of a first test signal; a normalized value of the signal-to-noise ratio of the first test signal; an index of a column vector corresponding to a first test signal with a high signal-to-noise ratio; the column vector corresponding to the first test signal with the high signal-to-noise ratio; or relative receive power of a column vector corresponding to the first test signal, where the first test signal is related to the column vector, and the at least one test signal includes the first test signal. In this way, test results of the plurality of paths may be flexibly fed back in a plurality of manners, and different resource overheads are used, for being applicable to different application scenarios.

In this embodiment of this disclosure, a communication method performed by the first communication apparatus 101 satisfies at least one of the following features: The information about the first apparatus 101 includes at least one of location information and antenna array information that are of the first apparatus 101; the information about the second apparatus 103 includes at least one of location information and antenna array information that are of the second apparatus 103; or the environment information includes at least one of an environment map and an environmental electromagnetic parameter. In this way, the first precoding matrix can be obtained through accurate calculation based on the information about the first apparatus 101, the information about the second apparatus 103, and the environment information, to reduce resource overheads of the CSI-RS and resource overheads of the CSI feedback, and ensure calculation accuracy.

In this embodiment of this disclosure, the second precoding operation by the first apparatus 101 includes: The first apparatus 101 corrects the second precoding matrix to determine a third precoding matrix. Further, the first apparatus 101 performs a second precoding operation on the signal based on the third precoding matrix. In this way, the precoding matrix can be optimized, to further improve the transmission efficiency.

In this embodiment of this disclosure, that the first apparatus 101 corrects the second precoding matrix includes: The first apparatus 101 weights a column of the second precoding matrix based on at least one of the following: receive power of a test signal corresponding to the column of the second precoding matrix; or a received signal-to-noise ratio of the test signal corresponding to the column of the second precoding matrix. In this way, a strong path on the channel can be fully used for optimizing the precoding matrix, to further improve the transmission efficiency.

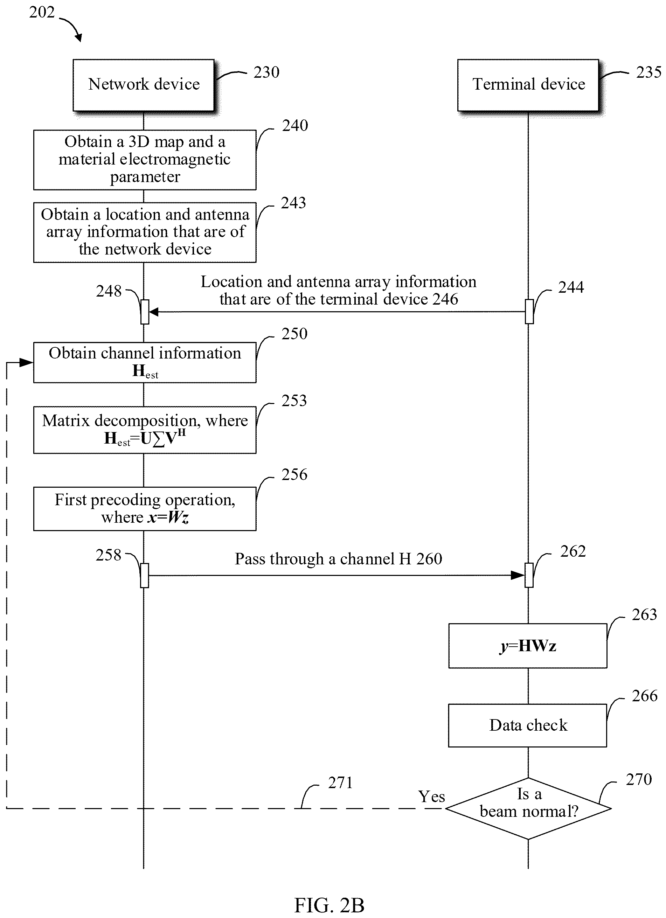

FIG. 2B is a diagram of a procedure 202 of channel estimation and precoding when a beam is normal according to an embodiment of this application. It should be noted that, the procedure 202 shown in FIG. 2B may be considered as an implementation, an embodiment, or an example of the procedure 200 in FIG. 2A. A network device 230 involved in the procedure 202 in FIG. 2B may be considered as an embodiment or an example of the first apparatus 101 in the procedure 200, and a terminal device 235 may be considered as an embodiment or an example of the second apparatus 103 in the procedure 200. As shown in FIG. 2B,

the network device 230 obtains (240) environment information. The environment information may be, for example, a 3D map, and material electromagnetic parameter information in an environment such as a building.

The network device 230 further obtains (243) location information and antenna array information that are of the network device, namely, information about the first apparatus. The antenna array information of the network device may include a quantity, locations, dimensions, orientations, patterns, and the like that are of antenna array elements.

The network device 230 obtains (248) location information and antenna array information 246 that are of the terminal device 235, namely, information about the second apparatus. The location information of the terminal device 235 may be provided by the terminal device 235, or may be obtained on a side of the network device 230 in a multi-node positioning means. The antenna array information of the terminal device 235 specifically includes a quantity, locations, dimensions, orientations, patterns, and the like that are of antenna array elements. The network device 230 may obtain the antenna array information of the terminal device 235 from the terminal device 235, for example, antenna array information that changes in real time and that is of a mobile terminal. For a fixedly deployed terminal, for example, a fixedly deployed internet of things (Internet of Things, IoT) device terminal, the antenna array information of the terminal device 235 may alternatively be obtained in a pre-configuration manner. This is not limited in this disclosure. It may be understood that, a sequence of obtaining the environment information, the location information and the antenna array information that are of the network device, and the location information and the antenna array information that are of the terminal device may be shown in FIG. 2A, or may be another sequence. This is not limited in this disclosure.

The network device 230 performs channel estimation based on the environment information, the information about the first apparatus, and the information about the second apparatus, to obtain (250) channel information $H_{est}$. Specifically, the channel information $H_{est}$ may be obtained by using an electromagnetic calculation method or a ray tracing method, or by using another method. This is not limited in this disclosure.

After obtaining the channel information $H_{est}$, the network device 230 performs matrix decomposition (253) on $H_{est}$, for example, in an SVD decomposition manner, to obtain $H_{est} = U\Sigma V^H$, where $V^H$ is a conjugate transpose matrix of V. In this way, a first precoding matrix W (M×K) of M rows and K columns is expressed as $W = V = [v_1 \, v_2 \cdots v_K]$, where $v_i$ is an $i^{th}$ column of V. Eigenvalues of a diagonal matrix $\Sigma$ (N×M) are arranged in descending order, and first K eigenvalues correspond to eigenvectors in W.

In this way, the first precoding matrix can be accurately calculated based on the environment information, the information about the first apparatus, and the information about the second apparatus without using a CSI-RS and CSI feedback, to avoid resource consumption caused by the CSI-RS and the CSI feedback. In addition, channel estimation is more accurate, the precoding matrix matches a channel better, and transmission efficiency is improved, in comparison with codebook-based precoding.

The network device 230 performs a first precoding operation (256) on a to-be-encoded signal z, to obtain a first precoded signal x, where $x = Wz$. In this embodiment of this disclosure, a water-filling algorithm may alternatively be used, and different weights are used for different $v_i$, that is, $W = [\rho_1 v_1 \, \rho_2 v_2 \cdots \rho_K v_K]$, where $\rho_i$ indicates a weight, for adjusting power corresponding to different streams. In this way, a strong path on the channel can be better used, to further improve the transmission efficiency. The network device 230 sends (258) the precoded signal x out through a transmit antenna, and the precoded signal x passes through a channel H 260 and then is received (262) by the terminal device 235.

The signal (263) received by the terminal device 235 is y, where $y = HWz$. After receiving the signal y, the terminal device 235 performs data check (266). A data check result may be determined based on beam mismatch information.

In a possible implementation, the beam mismatch information is determined based on CRC check and power change check. It may be understood that, the CRC check may alternatively use another check manner, such as parity check or forward error correction coding (Forward Error Correction Coding, FEC) check. This is not limited in this disclosure. For example, beam mismatch Beam_failure={CRC_NACK & PRT_NACK}, where CRC_NACK indicates that CRC check on demodulated data fails, and PRT_NACK indicates that a power ratio of received signals at two consecutive moments is less than a specific threshold. The power ratio is defined

as $\gamma_n = \dfrac{P(t_{n+1})}{P(t_n)}$ , where $P(t_n)$ indicates power that is of a received signal and that is at a moment $t_n$. When a CRC check error occurs on the terminal device 235, and $\gamma_n < \gamma_{threshold}$, the beam mismatch information Beam_failure is triggered. $\gamma_{threshold}$ is a given threshold, for example, may be related to a multi-path channel environment in a scenario. Beam_failure is a result of an AND operation on CRC_NACK and PRT_NACK, and is triggered only when both CRC_NACK and PRT_NACK are satisfied. CRC_NACK may be caused by random interference on a wireless channel, for example, broadband interference caused by vehicle ignition. The beam mismatch information Beam_failure is formed through the AND operation: CRC_NACK & PRT_NACK. In this way, the random interference can be eliminated, and reliability of Beam_failure check is improved. If the data check succeeds, and whether a beam is normal 270 is determined to be "yes", this indicates that the beam formed through precoding is good. In this case, the network device 230 only needs to perform channel estimation, calculate the first precoding matrix, and perform the first precoding operation on the data z according to step 240, step 243, step 248, step 250, step 253, and step 256. A dashed line 271 that is in the figure and that is after the beam is determined to be normal indicates that feedback that the data check is correct and the beam is normal is not required to be performed. That the data check is correct and the beam is normal corresponds to the scenario in FIG. 1A.

In this embodiment of this disclosure, a manner of determining the beam mismatch information may alternatively be implemented by detecting a CRC_NACK probability in a period of time. In a case of beam alignment, the CRC check error may also occur. Consequently, an error may exist in determining the beam mismatch via a single piece of CRC_NACK. The terminal device 235 may determine, by detecting the CRC_NACK probability in the period of time, whether the beam mismatch occurs. It is assumed that, in a period of time T, a quantity that is of data blocks received by the terminal device 235 is N, and CRC check errors occur on M data blocks. That $\beta = M/N$ may be defined. When $\beta > \beta_{threshold}$,

that is, greater than a given threshold, it is determined that the CRC check errors in this case are not caused by a random factor, but are caused by the beam mismatch, and the precoding matrix needs to be adjusted again. In this way, impact of the random interference can also be eliminated, and the reliability of Beam_failure check is improved.

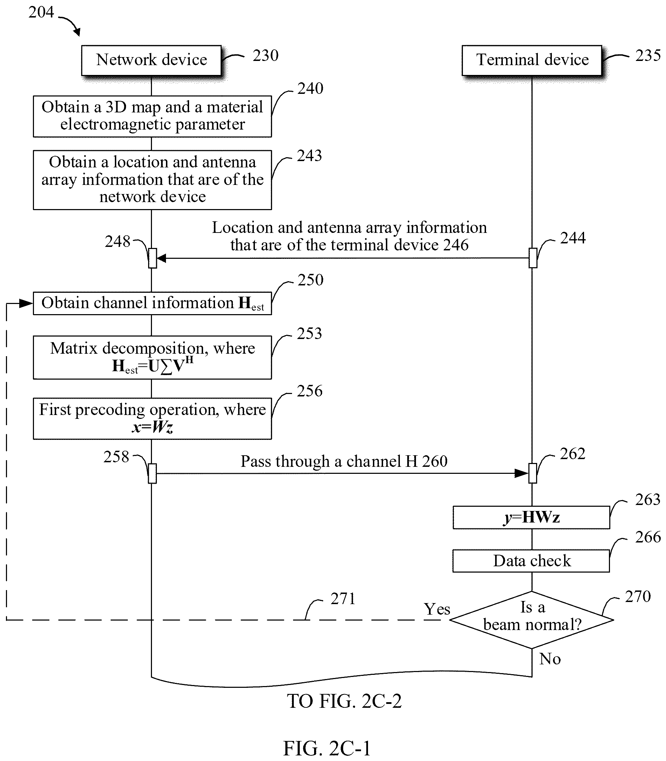

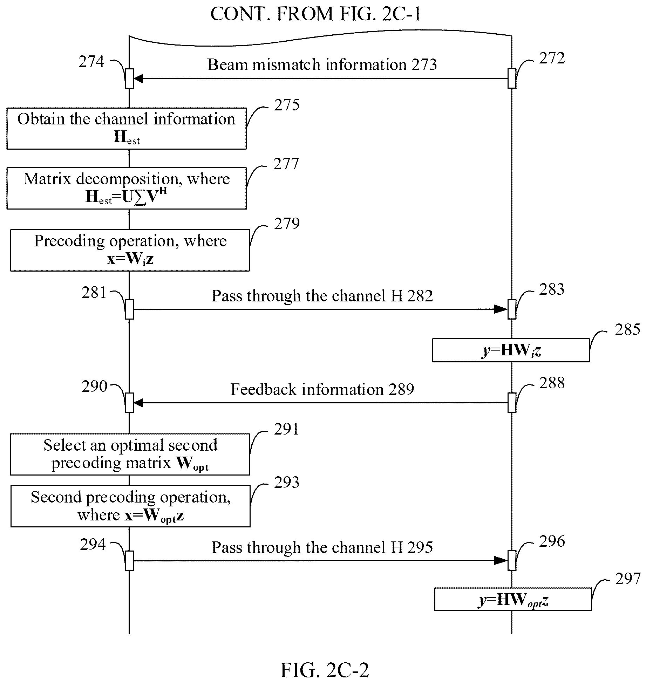

FIG. 2C-1 and FIG. 2C-2 are diagrams of a procedure 204 that is of channel estimation and precoding and that includes beam mismatch according to an embodiment of this application. A network device 230, a terminal device 235, and step 240 to step 270 in FIG. 2C-1 and FIG. 2C-2 are the same as those in FIG. 2B. It should be noted that, the procedure 204 shown in FIG. 2C-1 and FIG. 2C-2 may be considered as an implementation, an embodiment, or an example of the procedure 200 in FIG. 2A. The network device 230 involved in the procedure 204 in FIG. 2C-1 and FIG. 2C-2 may be considered as an embodiment or an example of the first apparatus 101 in the procedure 200, and the terminal device 235 may be considered as an embodiment or an example of the second apparatus 103 in the procedure 200.

As shown in FIG. 2C-1 and FIG. 2C-2, if data check fails, this indicates that a sudden change occurs in a channel environment. A moving target 107, for example, a vehicle, blocks a communication path. In this case, energy of a received signal is suddenly changed, and the beam mismatch occurs. In this case, the terminal device 235 feeds back (272) beam mismatch information 273 to the network device 230. In this way, dynamic detection can be performed on the beam mismatch caused by path blocking, and the beam mismatch is fed back to the network device 230, to facilitate the network device 230 in adjusting a precoding matrix, maintain matching between the precoding matrix and the channel environment, and improve transmission efficiency.

The network device 230 obtains (275) channel information $H_{est}$ based on environment information, information about a base station, and information about a terminal in a manner that is the same as or similar to a calculation operation (250) described above. During channel estimation, because a location of the terminal may move, the information about the terminal may be obtained again. The network device 230 performs matrix decomposition (277), for example, performs SVD decomposition, on the channel information matrix $H_{est}$, where $H_{est} = U\Sigma V^H$, to obtain eigenvectors $\{v_1, v_2, ... , v_N\}$, generates precoding matrices $W_i$ one by one based on eigenvectors $v_i$, separately performs precoding operations (279) on a to-be-precoded signal z, to obtain precoded signals x, where $x=W_i z$, and sends (281) a plurality of test signals x to the terminal device 235 one by one through a channel 282 in a single-stream manner. In this way, when a CSI-RS and CSI feedback are not used but $H_{est}$ is still used, detection can be performed on signals in a plurality of paths one by one in the single-stream manner. In this way, accurate detection is performed on the paths on the channel one by one in the single-stream manner.

The terminal device 235 receives (283) data sent based on different precoding matrices, that is, $y=HW_i z$. The terminal device 235 sends (278) feedback information 289 to the network device 230 based on features of the received signals y. The feedback information 289 may be a signal-to-noise ratio (Signal to Noise Ratio, SNR) of the signal y or a normalized value of the SNR. Alternatively, the feedback information 289 may be an eigenvector $v_k$ corresponding to a high SNR of the received signals y, or an index of the eigenvector $v_k$ corresponding to the high SNR of the received signals y, or relative power values $\rho_k$ corresponding to different eigenvectors $v_k$ in the received signals. The high signal-to-noise ratio may be greater than a preset signal-to-noise ratio threshold, or may be several high SNRs selected from those of all the received signals y, or may be determined in another high SNR determining manner. This is not limited in this disclosure. The relative power value $\rho_k$ may be a relative value relative to maximum power of the received signal. In this way, states of the received signals on the paths may be flexibly fed back in different manners, and different overheads are used for adapting to different application scenarios. For example, the terminal device 235 feeds back an SNR of the received signal or a normalized value of the SNR of the received signal, so that an implementation of the terminal can be simplified, and costs of the terminal can be reduced. The terminal device 235 feeds back the eigenvector corresponding to the high SNR, to facilitate the network device 230 in directly optimizing the precoding matrix. The terminal device 235 feeds back the index of the eigenvector corresponding to the high SNR, so that an amount of transmitted data in the feedback information can be reduced, to reduce transmission resource overheads. The terminal device 235 feeds back the relative power values $\rho_k$ corresponding to the different eigenvectors $v_k$ in the received signals, and this can facilitate the network device 230 in further optimizing the precoding matrix based on a water-filling algorithm. When the network device 230 sends the plurality of test signals x stream by stream, y correspondingly received by the terminal device 235 is a first test signal, and the first test signal is related to a column of a first precoding matrix W.

After receiving (290) the feedback information 289, the network device 230 selects (291) an optimal second precoding matrix $\underline{W_{opt}}$ based on the feedback information 289. For example, when no sudden change occurs on the channel, eigenvectors corresponding to first K large eigenvalues may be selected. However, when the vehicle blocks a line of sight (Line of Sight, LOS) in the environment, $v_1$ no longer corresponds to a strongest path in this case. In this case, the network device 230 may select a 2nd eigenvector to a (K+1)th eigenvector to form a new second precoding matrix. Alternatively, after the strongest path is blocked, a quantity of valid streams becomes K-1 streams. The network device 230 may select a $2^{nd}$ eigenvector to a $K^{th}$ eigenvector to form a new second precoding matrix. The network device 230 performs a second precoding operation (293) on the data z by using the selected second precoding matrix $W_{opt}$, where $x=W_{opt}z$, and sends (294) x to the terminal device 235 through a channel H 295. The terminal device 235 obtains (297) a received signal y, where $y=HW_{opt}z$. In this way, the precoding matrix can be adjusted based on an environment change, to ensure matching between the precoding matrix and the channel environment. It may be understood that, a policy on selecting a column of a precoding matrix may alternatively be completed at the terminal device 235. This is not limited in this disclosure.

In this embodiment of this disclosure, the waterfilling algorithm may alternatively be used, and weighting is performed on different columns of $W_{opt}$ by using different weights, for adjusting power corresponding to different streams. The weight may be receive power of a test signal corresponding to a column of the second precoding matrix, or a received signal-to-noise ratio of the test signal corresponding to the column of the second precoding matrix. In this way, a strong path on the channel can be better used, to further improve the transmission efficiency.

In this embodiment of this disclosure, for the precoding operation (279), alternatively, the network device 230 may simultaneously send a signal on a plurality of eigenvectors in a code division manner, that is, $\mathbf{x} = \sum_{m=1}^{M} \boldsymbol{v}_m z_m$. Orthogonal coding is used for $z_m$. In this way, detection can be simultaneously performed on the plurality of paths in a multi-stream manner, to reduce time for the feedback information and time for selecting the optimal precoding matrix, and improve efficiency. It may be understood that, the signal may alternatively be sent on the plurality of eigenvectors in a frequency division manner or another manner. This is not limited in this disclosure. In this case, the terminal device 235 performs orthogonal detection on the received signals y, and may obtain first test signals related to columns of the first precoding matrix W. The feedback information 289 is related to the first test signal.

In this embodiment of this disclosure, after adjustment through precoding succeeds, if adjusted detection results of beams that correspond to the columns of the selected precoding matrix are the same as beams corresponding to first K maximum eigenvectors, the network device 230 may determine that the change in the environment has ended and the blocking has disappeared, may perform precoding again by using the channel information $H_{est}$ obtained through calculation, and may return to the procedure shown in FIG. 2B.

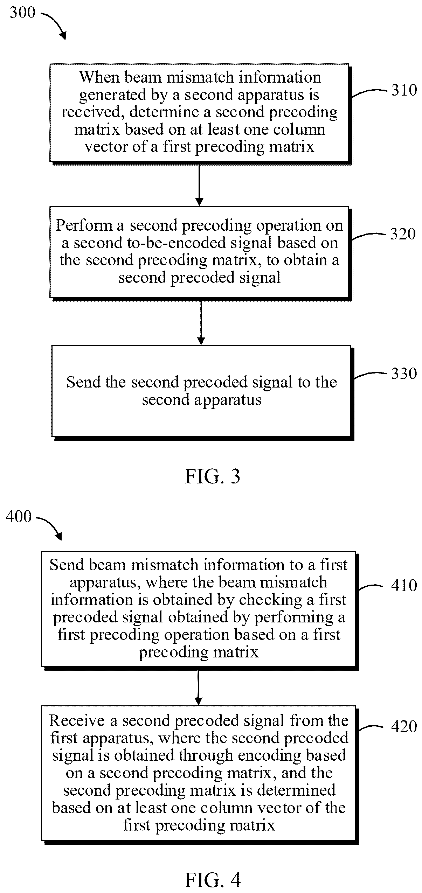

FIG. 3 is a flowchart 300 of a communication method implemented at a first apparatus 101 according to an embodiment of this disclosure. In a possible implementation, the method 300 may be implemented by a first apparatus 101 in an example environment 100. In other possible implementations, the method 300 may alternatively be implemented by another electronic apparatus independent of the example environment 100. In an example, the method 300 is described below by using an example in which the method 300 is implemented by the first apparatus 101, for example, a terminal device, in the example environment 100.

310: When receiving beam mismatch information generated by a second apparatus 103, the first apparatus 101 determines a second precoding matrix based on at least one column vector of a first precoding matrix.

320: The first apparatus 101 performs a second precoding operation on a second to-be-encoded signal based on the second precoding matrix, to obtain a second precoded signal.

330: The first apparatus 101 sends the second precoded signal to the second apparatus 103.

In some embodiments, the first apparatus 101 further performs a first precoding operation on a first to-be-encoded signal based on the first precoding matrix, to obtain a first precoded signal; and the first apparatus 101 sends the first precoded signal to the second apparatus 103, where the first precoding matrix is determined based on information about the first apparatus, information about the second apparatus, and environment information.

In some embodiments, that the first apparatus 101 determines the second precoding matrix based on the at least one column vector of the first precoding matrix includes: The first apparatus 101 sends at least one test signal to the second apparatus based on the column vector of the first precoding matrix; the first apparatus 101 receives feedback information that corresponds to the test signal and that is from the second apparatus 103; and the first apparatus 101 generates the second precoding matrix based on the feedback information.

In some embodiments, that the first apparatus 101 sends the at least one test signal based on the column vector of the first precoding matrix includes: The first apparatus 101 sequentially sends, based on a plurality of column vectors of the first precoding matrix to the second apparatus 103, a plurality of test signals corresponding to the plurality of column vectors.

In some embodiments, that the first apparatus 101 sends the at least one test signal based on the column vector of the first precoding matrix includes: The first apparatus 101 generates, based on a plurality of column vectors of the first precoding matrix by using an orthogonal signal, one test signal corresponding to the plurality of column vectors; and the first apparatus 101 sends the test signal to the second apparatus 103.

In some embodiments, the orthogonal signal includes a code division signal, a frequency division signal, or any combination of the listed items.

In some embodiments, the feedback information includes: a signal-to-noise ratio of a first test signal; a normalized value of the signal-to-noise ratio of the first test signal; an index of a column vector corresponding to a first test signal with a high signal-to-noise ratio; the column vector corresponding to the first test signal with the high signal-to-noise ratio; relative receive power of a column vector corresponding to the first test signal, where the first test signal is related to the column vector, and the at least one test signal includes the first test signal; or any combination of the listed items.

In some embodiments, a feature of the method includes: the information about the first apparatus 101, including location information of the first apparatus 101, antenna array information of the first apparatus 101, or any combination of the listed items; the information about the second apparatus 103, including location information of the second apparatus 103, antenna array information of the second apparatus 103, or any combination of the listed items; the environment information, including an environment map, an environmental electromagnetic parameter, or any combination of the listed items; or any combination of the listed items.

In some embodiments, the second precoding operation by the first apparatus 101 includes: The first apparatus 101 corrects the second precoding matrix to determine a third precoding matrix; and the first apparatus 101 performs a second precoding operation on the signal based on the third precoding matrix.

In some embodiments, that the first apparatus 101 corrects the second precoding matrix includes: The first apparatus 101 weights a column of the second precoding matrix based on one of the following items or any combination of the listed items: receive power of a test signal corresponding to the column of the second precoding matrix; or a received signal-to-noise ratio of the test signal corresponding to the column of the second precoding matrix.

FIG. 4 is a flowchart of a communication method implemented at a second apparatus 103 according to an embodiment of this application. In a possible implementation, a method 400 may be implemented by a second apparatus 103, for example, a network device, in an example environment 100. In other possible implementations, the method 400 may alternatively be implemented by another electronic apparatus independent of the example environment 100. In an example, the method 400 is described below by using an example in which the method 400 is implemented by the second apparatus 103 in the example environment 100.

410: The second apparatus 103 sends beam mismatch information to a first apparatus 101, where the beam mismatch information is obtained by checking a first precoded signal obtained by performing a first precoding operation based on a first precoding matrix.

420: The second apparatus 103 receives a second precoded signal from the first apparatus 101, where the second precoded signal is obtained through encoding based on a second precoding matrix, and the second precoding matrix is determined based on at least one column vector of the first precoding matrix.

In some embodiments, the checking the first precoded signal includes: Data of the first precoded signal is incorrect, and a power change of the signal received by the second apparatus from the first apparatus is greater than a first threshold; a data error probability of the first precoded signal is greater than a second threshold; or any combination of the listed items.

In some embodiments, the method 400 further includes: The second apparatus 103 receives at least one test signal from the first apparatus 101; and the second apparatus 103 sends feedback information based on the at least one test signal.

In some embodiments, the feedback information includes: a signal-to-noise ratio of a first test signal; a normalized value of the signal-to-noise ratio of the first test signal; an index of a column vector corresponding to a first test signal with a high signal-to-noise ratio; the column vector corresponding to the first test signal with the high signal-to-noise ratio; relative receive power of a column vector corresponding to the first test signal, where the first test signal is related to the column vector, and the at least one test signal includes the first test signal; or any combination of the listed items.

In some embodiments, the test signal is generated from an orthogonal signal.

In the foregoing embodiments provided in this application, the methods provided in embodiments of this application are separately described from perspectives of a network device, a terminal device, and interaction between the network device and the terminal device. To implement functions in the methods provided in embodiments of this application, the network device and the terminal device may include a hardware structure and/or a software module, and implement the functions in a form of the hardware structure, the software module, or the hardware structure plus the software module. Whether a specific function in the foregoing functions is performed by using the hardware structure, the software module, or the hardware structure plus the software module depends on particular applications and design constraints of the technical solutions.

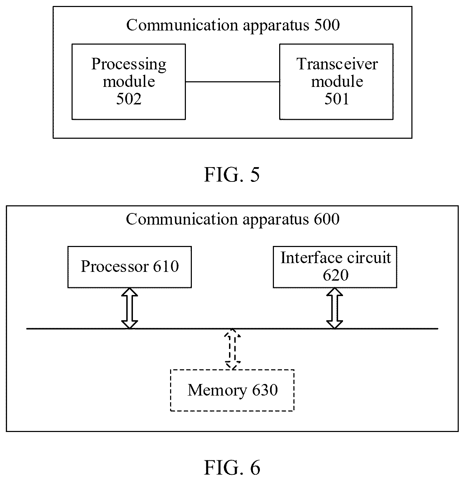

FIG. 5 and FIG. 6 are diagrams of structures of possible communication apparatuses according to embodiments of this application. The communication apparatuses may implement a function of the terminal device or the network device in the foregoing method embodiments. Therefore, beneficial effects of the foregoing method embodiments can also be implemented. In embodiments of this application, the communication apparatus may be the second apparatus 103, for example, a terminal device, shown in FIG. 2A, may be the first apparatus 101, for example, a network device, shown in FIG. 2A, or may be a module (for example, a chip) used in the terminal device or the network device.

As shown in FIG. 5, the communication apparatus 500 includes a transceiver module 501 and a processing module 502. The communication apparatus 500 may be configured to implement a function of the network device in the method embodiments shown in FIG. 2A.

When the communication apparatus 500 is configured to implement the function of the network device 230 in the method embodiments in FIG. 2A, the processing module 502 is configured to: determine a second precoding matrix 215 based on at least one column vector of a first precoding matrix; and perform, based on the second precoding matrix, a second precoding operation 220 on a signal to be sent to the second apparatus 103; and the transceiver module 601 is configured to: receive beam mismatch information 210 generated by the second apparatus 103; and send the signal 225 obtained by performing the second precoding operation to the second apparatus 103.

When the communication apparatus 500 is configured to implement the function of the terminal device 235 in the method embodiments in FIG. 2A, the processing module 502 is configured to: obtain the beam mismatch information 210 by checking a signal obtained by performing a first precoding operation; and the transceiver module 501 is configured to: send the beam mismatch information 210; and receive the signal 225 obtained by performing the second precoding operation.

For more detailed descriptions of the transceiver module 501 and the processing module 502, refer to related descriptions in the foregoing method embodiments. Details are not described herein again.

As shown in FIG. 6, the communication apparatus 600 includes a processor 610 and an interface circuit 620. The processor 610 and the interface circuit 620 are coupled to each other. It may be understood that, the interface circuit 620 may be a transceiver or an input/output interface. Optionally, the communication apparatus 700 may further include a memory 630 configured to store instructions executed by the processor 610, or store input data required by the processor 610 to run the instructions, or store data generated after the processor 610 runs the instructions. Optionally, the processor 610 and the memory 630 may be integrated into a system on a chip (System on a Chip, SoC), for example, a chip; or another integrated apparatus. Optionally, the interface circuit 620 may also be integrated into a system on chip SoC, for example, a chip; or another integrated apparatus.

When the communication apparatus 600 is configured to implement the method in the foregoing method embodiments, the processor 610 is configured to perform a function of the foregoing processing module 502, and the interface circuit 620 is configured to perform a function of the foregoing transceiver module 501.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, and the information is sent by a network device to the terminal device. Alternatively, the chip in the terminal device sends information to another module (for example, a radio frequency module or an antenna) in the terminal device, and the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, and the information is sent by a terminal device to the network device. Alternatively, the chip in the network device sends information to another module (for example, a radio frequency module or an antenna) in the network device, and the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware part, or any combination thereof. The general-purpose processor may be a microprocessor, or may be any conventional processor.

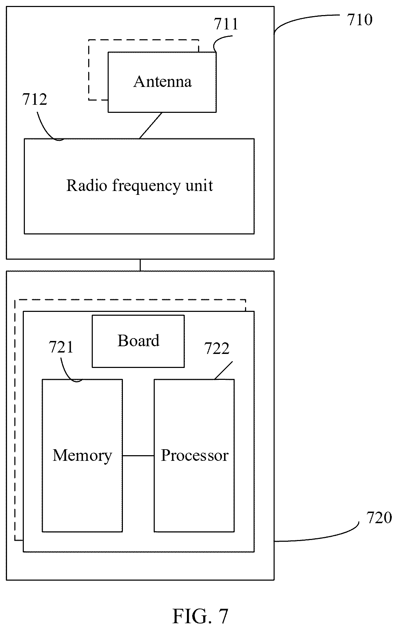

When the apparatus in embodiments of this application is a network device, the apparatus may be shown in FIG. 7. The apparatus may include one or more transceiver modules 710 and one or more processing modules 720. The transceiver module 710 may include a sending module and a receiving module, or the transceiver module may be a module that can implement sending and receiving functions. The transceiver module may correspond to the transceiver module 501 in FIG. 5, to be specific, may perform an action performed by the transceiver module 501. Optionally, the transceiver module may also be referred to as a transceiver machine, a transceiver circuit, a transceiver, or the like, and may include at least one antenna 711 and a radio frequency unit 712. The transceiver module 710 is mainly configured to receive and send a radio frequency signal, and perform conversion between the radio frequency signal and a baseband signal. For example, the transceiver module 710 is a remote radio unit (remote radio unit, RRU). The processing module 720 is mainly configured to perform baseband processing, control the network device, and the like. For example, the processing module 720 is a baseband unit (baseband unit, BBU), and may also be referred to as a digital unit (digital unit, DU). The transceiver module 710 and the processing module 720 may be physically arranged together, or may be physically arranged separately, namely, a distributed base station.

The processing module 720 is a control center of the network device, may correspond to the processing module 502 in FIG. 5, and is mainly configured to complete a baseband processing function, such as channel encoding, multiplexing, modulation, and spectrum spreading. In addition, the processing module may perform an action performed by the processing module 702. For example, the processing module 720 may be configured to control a base station to perform an operation procedure related to the network device in the foregoing method embodiments.

In an example, the processing module 720 may include one or more boards. A plurality of boards may jointly support a radio access network (for example, a 5G network or an LTE network) in a single access standard, or may separately support radio access networks (for example, LTE networks, 5G networks, or other networks) in different access standards. The processing module 720 further includes a memory 721 and a processor 722. The memory 721 is configured to store necessary instructions and necessary data. The processor 722 is configured to control the base station to perform a necessary action, for example, configured to control the base station to perform an operation procedure related to the network device in the foregoing method embodiments. The memory 721 and the processor 722 may serve one or more boards. In other words, a memory and a processor may be arranged on each board. Alternatively, a plurality of boards may share a same memory and a same processor. In addition, a necessary circuit may further be arranged on each board.

An embodiment of this application provides a communication system. The communication system may include the terminal device involved in the embodiment shown in FIG. 2A, and include the network device involved in the embodiment shown in FIG. 2A. Optionally, the terminal device and the network device that are in the communication system may perform any one of communication methods shown in FIG. 2A.

An embodiment of this application further provides a circuit. The circuit may be coupled to a memory, and may be configured to perform a procedure related to the terminal device or the network device in any one of embodiments shown in the foregoing method embodiments. The chip system may include a chip, and may further include another component such as a memory or a transceiver.

It should be understood that, the processor mentioned in embodiments of this application may be a CPU, a baseband processor, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that, the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that, the memory described in this specification is intended to include but is not limited to these memories and any memory of another proper type.

It should be understood that, in embodiments of this application, sequence numbers of the foregoing processes do not mean execution sequences. The execution sequences of the processes should be determined based on functions and internal logic of the processes, and should not be construed as any limitation on implementation processes of embodiments of this application.

It is to be aware that, in combination with examples described in embodiments disclosed in this specification, modules and algorithm steps can be implemented by electronic hardware or a combination of computer software and electronic hardware. Whether the functions are performed in a hardware or software manner depends on particular applications and design constraints of the technical solutions. A person skilled in the art may use different methods to implement the described functions for each particular application, but it should not be considered that the implementation goes beyond the scope of this application.

It may be clearly understood that, for the purpose of convenient and brief description, for a specific working process of the foregoing systems, apparatuses, and modules, refer to a corresponding process in the foregoing method embodiments. Details are not described herein again.

In a plurality of embodiments provided in this application, it should be understood that, the disclosed communication method and apparatus may be implemented in other manners. For example, the apparatus embodiments described above are merely examples. For example, division of the modules is merely logical function division. In an actual implementation, there may be another division manner. For example, a plurality of modules or components may be combined or integrated into another system, or some features may be ignored or not performed. In addition, displayed or discussed mutual couplings or direct couplings or communication connections may be implemented through some interfaces. Indirect couplings or communication connections between the apparatuses or units may be implemented in electronic, mechanical, or other forms.

Modules described as separate parts may or may not be physically separate, and parts displayed as modules may or may not be physical modules, to be specific, may be located in one place or may be distributed on a plurality of network units. A part or all of the units may be selected based on an actual requirement to achieve the objectives of the solutions in embodiments.

In addition, functional modules in embodiments of this application may be integrated into one processing module, each of the modules may exist alone physically, or two or more modules may be integrated into one module.

If the function is implemented in a form of a software functional module and sold or used as an independent product, the function may be stored in a computer-readable storage medium. Based on such an understanding, the technical solutions of this application essentially, or the part making contributions, or a part of the technical solutions may be embodied in a form of a software product. The computer software product is stored in a storage medium, and includes a plurality of instructions for instructing a computer device (which may be a personal computer, a server, a network device, or the like) to perform all or a part of steps of the method in embodiments of this application. The foregoing computer-readable storage medium may be any usable medium that can be accessed by a computer. The following provides an example but does not constitute a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can be used to carry or store expected program code in a form of instructions or a data structure and that can be accessed by a computer.

As used in this specification, the term "including" and similar terms should be understood as an open inclusion, that is, "including but not limited to". The term "based on" should be understood as "at least partially based on". The term "one embodiment" or "this embodiment" should be understood as "at least one embodiment". Terms such as "first", "second", and the like may indicate different objects or a same object, and are merely used for distinguishing between indicated objects, but do not imply a particular spatial order, a chronological order, an order of importance, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that, such a description is intended to indicate that a selection may be made among many available functional selections, and that such a selection does not need to be better, lower, higher, smaller, larger, or otherwise preferred than other selections in other aspects or all aspects. As used in this specification, the term "determining" may cover a variety of actions. For example, "determining" may include operating, calculating, processing, exporting, investing, lookup (for example, lookup in a table, database, or another data structure), finding, and the like. In addition, "determining" may include receiving (for example, receiving information), accessing (for example, accessing data in a memory), and the like. In addition, "determining" may include parsing, selecting, picking, establishing, and the like.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:

   when receiving beam mismatch information generated by a second apparatus, determining, by a first apparatus, a second precoding matrix based on at least one column vector of a first precoding matrix;
   performing, by the first apparatus, a second precoding operation on a second to-be-encoded signal based on the second precoding matrix, to obtain a second precoded signal; and
   sending, by the first apparatus, the second precoded signal to the second apparatus.

**2.** The method according to claim 1, further comprising:

performing, by the first apparatus, a first precoding operation on a first to-be-encoded signal based on the first precoding matrix, to obtain a first precoded signal; and
sending, by the first apparatus, the first precoded signal to the second apparatus, wherein the first precoding matrix is determined based on information about the first apparatus, information about the second apparatus, and environment information.

**3.** The method according to claim 1 or 2, wherein the determining the second precoding matrix based on at least one column vector of the first precoding matrix comprises:

sending, by the first apparatus, at least one test signal to the second apparatus based on the column vector of the first precoding matrix;
receiving, by the first apparatus, feedback information that corresponds to the test signal and that is from the second apparatus; and
generating, by the first apparatus, the second precoding matrix based on the feedback information.

**4.** The method according to claim 3, wherein the sending the at least one test signal based on the column vector of the first precoding matrix comprises:
sequentially sending, by the first apparatus based on a plurality of column vectors of the first precoding matrix to the second apparatus, a plurality of test signals corresponding to the plurality of column vectors.

**5.** The method according to claim 3, wherein the sending the at least one test signal based on the column vector of the first precoding matrix comprises:

generating, by the first apparatus based on a plurality of column vectors of the first precoding matrix by using an orthogonal signal, one test signal corresponding to the plurality of column vectors; and
sending, by the first apparatus, the test signal to the second apparatus.

**6.** The method according to claim 5, wherein the orthogonal signal comprises at least one of the following:

a code division signal; or
a frequency division signal.

**7.** The method according to any one of claims 3 to 6, wherein the feedback information comprises at least one of the following:

a signal-to-noise ratio of a first test signal;
a normalized value of the signal-to-noise ratio of the first test signal;
an index of the column vector corresponding to the first test signal with a high signal-to-noise ratio;
the column vector corresponding to the first test signal with the high signal-to-noise ratio; or
relative receive power of the column vector corresponding to the first test signal, wherein
the first test signal is related to the column vector, and the at least one test signal comprises the first test signal.

**8.** The method according to any one of claims 2 to 7, wherein at least one of the following is satisfied:

the information about the first apparatus comprises at least one of location information and antenna array information that are of the first apparatus;
the information about the second apparatus comprises at least one of location information and antenna array information that are of the second apparatus; or
the environment information comprises at least one of an environment map and an environmental electromagnetic parameter.

**9.** The method according to any one of claims 2 to 8, wherein the second precoding operation comprises:

correcting the second precoding matrix to determine a third precoding matrix; and
performing a second precoding operation on the signal based on the third precoding matrix.

**10.** The method according to claim 9, wherein the correcting the second precoding matrix comprises:
weighting a column of the second precoding matrix based on at least one of the following:

receive power of a test signal corresponding to the column of the second precoding matrix; or
a received signal-to-noise ratio of the test signal corresponding to the column of the second precoding matrix.

**11.** A communication method, comprising:

sending, by a second apparatus, beam mismatch information to a first apparatus, wherein the beam mismatch information is obtained by checking a first precoded signal obtained by performing a first precoding operation based on a first precoding matrix; and
receiving, by the second apparatus, a second precoded signal from the first apparatus, wherein the second precoded signal is obtained through encoding based on a second precoding matrix, and the second precoding matrix is determined based on at least one column vector of the first precoding matrix.

12. The method according to claim 11, wherein checking the first precoded signal comprises at least one of the following:

> data of the first precoded signal is incorrect, and a power change of the signal received by the second apparatus from the first apparatus is greater than a first threshold; or
> a data error probability of the first precoded signal is greater than a second threshold.

13. The method according to claim 11 or 12, further comprising:

> receiving, by the second apparatus, at least one test signal from the first apparatus; and
> sending, by the second apparatus, feedback information based on the at least one test signal.

14. The method according to claim 13, wherein the feedback information comprises at least one of the following:

> a signal-to-noise ratio of a first test signal;
> a normalized value of the signal-to-noise ratio of the first test signal;
> an index of the column vector corresponding to the first test signal with a high signal-to-noise ratio;
> the column vector corresponding to the first test signal with the high signal-to-noise ratio; or
> relative receive power of the column vector corresponding to the first test signal, wherein the first test signal is related to the column vector, and the at least one test signal comprises the first test signal.

15. The method according to claim 13 or 14, wherein the test signal is generated from an orthogonal signal.

16. A communication apparatus, comprising a module or a unit configured to perform the method according to any one of claims 1 to 10.

17. A communication apparatus, comprising a module or a unit configured to perform the method according to any one of claims 11 to 15.

18. A communication apparatus, comprising a processor, wherein the processor is coupled to a memory storing instructions; and when the instructions are executed by the processor, the communication apparatus is caused to perform the method according to any one of claims 1 to 10.

19. A communication apparatus, comprising a processor, wherein the processor is coupled to a memory storing instructions; and when the instructions are executed by the processor, the communication apparatus is caused to perform the method according to any one of claims 11 to 15.

20. A computer-readable storage medium, wherein the computer-readable storage medium stores instructions; and when the instructions are executed by a processor, the processor is caused to perform the method according to any one of claims 1 to 10 or any one of claims 11 to 15.

21. A computer program product, wherein the computer program product comprises instructions; and when the instructions are executed by a processor, the processor is caused to perform the method according to any one of claims 1 to 10 or any one of claims 11 to 15.

22. A communication system, wherein the communication system comprises: a first apparatus and a second apparatus, wherein

> the first apparatus is configured to perform the method according to any one of claims 1 to 10; and
> the second apparatus is configured to perform the method according to any one of claims 11 to 15.

FIG. 1A

FIG. 1B

200

First apparatus — 101        Second apparatus — 103

212 — 210: Beam mismatch information — 208

Determine a second precoding matrix — 215

Second precoding operation — 220

223 — 225: Second precoded signal — 227

FIG. 2A

```
                                  202
```

**Network device** — 230                    **Terminal device** — 235

Obtain a 3D map and a material electromagnetic parameter — 240

Obtain a location and antenna array information that are of the network device — 243

248 — Location and antenna array information that are of the terminal device 246 — 244

Obtain channel information $\mathbf{H}_{est}$ — 250

Matrix decomposition, where $\mathbf{H}_{est}=\mathbf{U}\sum\mathbf{V}^{\mathbf{H}}$ — 253

First precoding operation, where $x=Wz$ — 256

258 — Pass through a channel H 260 — 262

$y=\mathbf{HWz}$ — 263

Data check — 266

271 — Yes — Is a beam normal? — 270

FIG. 2B

23

204

| Network device | 230

Obtain a 3D map and a material electromagnetic parameter | 240

Obtain a location and antenna array information that are of the network device | 243

| Terminal device | 235

248 — Location and antenna array information that are of the terminal device 246 — 244

Obtain channel information $\mathbf{H}_{est}$ | 250

Matrix decomposition, where $\mathbf{H}_{est} = \mathbf{U}\sum\mathbf{V}^{\mathbf{H}}$ | 253

First precoding operation, where $x=Wz$ | 256

258 — Pass through a channel H 260 — 262

$y=\mathbf{HWz}$ | 263

Data check | 266

271 — Yes — Is a beam normal? — 270

No

TO FIG. 2C-2

FIG. 2C-1

CONT. FROM FIG. 2C-1

274 — Beam mismatch information 273 — 272

Obtain the channel information $\mathbf{H}_{est}$ — 275

Matrix decomposition, where $\mathbf{H}_{est}=\mathbf{U}\sum\mathbf{V}^{H}$ — 277

Precoding operation, where $\mathbf{x}=\mathbf{W}_i\mathbf{z}$ — 279

281 — Pass through the channel H 282 — 283

$y=\mathbf{HW}_i z$ — 285

290 — Feedback information 289 — 288

Select an optimal second precoding matrix $\mathbf{W}_{opt}$ — 291

Second precoding operation, where $\mathbf{x}=\mathbf{W}_{opt}\mathbf{z}$ — 293

294 — Pass through the channel H 295 — 296

$y=\mathbf{HW}_{opt}z$ — 297

FIG. 2C-2

300 ⌐

┌─────────────────────────────────┐
│ When beam mismatch information   │
│ generated by a second apparatus is │ ⌐ 310
│ received, determine a second precoding │
│ matrix based on at least one column │
│ vector of a first precoding matrix │
└─────────────────────────────────┘
                 │
                 ▼
┌─────────────────────────────────┐
│ Perform a second precoding operation on │
│ a second to-be-encoded signal based on │ ⌐ 320
│ the second precoding matrix, to obtain a │
│ second precoded signal │
└─────────────────────────────────┘
                 │
                 ▼
┌─────────────────────────────────┐
│ Send the second precoded signal to the │ ⌐ 330
│ second apparatus │
└─────────────────────────────────┘

FIG. 3

400 ⌐

┌─────────────────────────────────┐
│ Send beam mismatch information to a first │
│ apparatus, where the beam mismatch │ ⌐ 410
│ information is obtained by checking a first │
│ precoded signal obtained by performing a │
│ first precoding operation based on a first │
│ precoding matrix │
└─────────────────────────────────┘
                 │
                 ▼
┌─────────────────────────────────┐
│ Receive a second precoded signal from the │ ⌐ 420
│ first apparatus, where the second precoded │
│ signal is obtained through encoding based │
│ on a second precoding matrix, and the │
│ second precoding matrix is determined │
│ based on at least one column vector of the │
│ first precoding matrix │
└─────────────────────────────────┘

FIG. 4

Communication apparatus 500

Processing module 502

Transceiver module 501

FIG. 5

Communication apparatus 600

Processor 610

Interface circuit 620

Memory 630

FIG. 6

711 — 710

Antenna

712

Radio frequency unit

Board

721    722

Memory    Processor

720

FIG. 7

## INTERNATIONAL SEARCH REPORT

International application No.

**PCT/CN2022/133517**

**A. CLASSIFICATION OF SUBJECT MATTER**

H04L27/00(2006.01)i; H04B7/0456(2017.01)i

According to International Patent Classification (IPC) or to both national classification and IPC

**B. FIELDS SEARCHED**

Minimum documentation searched (classification system followed by classification symbols)

IPC:H04L; H04B

Documentation searched other than minimum documentation to the extent that such documents are included in the fields searched

Electronic data base consulted during the international search (name of data base and, where practicable, search terms used)

3GPP, CNTXT, ENTXT, ENTXTC, CNKI: 预编码, 矩阵, 列向量, 感知, 自适应, 动态, 生成, 确定, 第二, 不同, 检测, 测试, 反馈, 信道, 变化, 匹配, 选择, 优化, 非码本, precode, matrix, column, optimal, vector, adjust, change, determine, generate, feedback, CSI, CQI

**C. DOCUMENTS CONSIDERED TO BE RELEVANT**

| Category* | Citation of document, with indication, where appropriate, of the relevant passages | Relevant to claim No. |
|---|---|---|
| X | CN 107181562 A (CHINA ACADEMY OF TELECOMMUNICATIONS TECHNOLOGY) 19 September 2017 (2017-09-19) description, paragraphs [0101]-[0244] | 1, 2, 8, 11, 12, 16-22 |
| A | CN 113872651 A (COMBA NETWORK SYSTEMS CO., LTD.) 31 December 2021 (2021-12-31) entire document | 1-22 |
| A | CN 111971937 A (SHANGHAI LANGBO COMMUNICATION TECHNOLOGY CO., LTD.) 20 November 2020 (2020-11-20) entire document | 1-22 |
| A | CN 108199754 A (SHANGHAI HUAWEI TECHNOLOGIES CO., LTD.) 22 June 2018 (2018-06-22) entire document | 1-22 |
| A | US 2020343948 A1 (SHABAN AHMED WAGDY ABDELWAHAB et al.) 29 October 2020 (2020-10-29) entire document | 1-22 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 August 2023** | **10 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/133517** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2012106595 A1 (QUALCOMM INC.) 03 May 2012 (2012-05-03)<br>entire document | 1-22 |

Form PCT/ISA/210 (second sheet) (July 2022)

**INTERNATIONAL SEARCH REPORT**
Information on patent family members

International application No.

**PCT/CN2022/133517**

| Patent document cited in search report | | | Publication date (day/month/year) | Patent family member(s) | | | Publication date (day/month/year) |
|---|---|---|---|---|---|---|---|
| CN | 107181562 | A | 19 September 2017 | WO | 2017152747 | A1 | 14 September 2017 |
| | | | | US | 2019074885 | A1 | 07 March 2019 |
| | | | | US | 10505614 | B2 | 10 December 2019 |
| | | | | EP | 3429108 | A1 | 16 January 2019 |
| | | | | EP | 3429108 | A4 | 27 March 2019 |
| CN | 113872651 | A | 31 December 2021 | CN | 113872651 | B | 27 December 2022 |
| CN | 111971937 | A | 20 November 2020 | WO | 2019213852 | A1 | 14 November 2019 |
| | | | | US | 2021006306 | A1 | 07 January 2021 |
| | | | | US | 11063643 | B2 | 13 July 2021 |
| | | | | CN | 111971937 | B | 24 December 2021 |
| CN | 108199754 | A | 22 June 2018 | | None | | |
| US | 2020343948 | A1 | 29 October 2020 | AU | 2020261763 | A1 | 23 December 2021 |
| | | | | EP | 3959827 | A1 | 02 March 2022 |
| | | | | EP | 3959827 | A4 | 29 June 2022 |
| | | | | US | 10951286 | B2 | 16 March 2021 |
| | | | | WO | 2020215986 | A1 | 29 October 2020 |
| US | 2012106595 | A1 | 03 May 2012 | EP | 2567466 | A1 | 13 March 2013 |
| | | | | EP | 2567466 | B1 | 15 January 2020 |
| | | | | WO | 2011140262 | A1 | 10 November 2011 |
| | | | | KR | 20130040903 | A | 24 April 2013 |
| | | | | KR | 101517435 | B1 | 04 May 2015 |
| | | | | KR | 20140084323 | A | 04 July 2014 |
| | | | | KR | 101690150 | B1 | 27 December 2016 |
| | | | | JP | 2013530603 | A | 25 July 2013 |
| | | | | JP | 5635183 | B2 | 03 December 2014 |
| | | | | US | 2018091206 | A1 | 29 March 2018 |
| | | | | US | 9887754 | B2 | 06 February 2018 |

Form PCT/ISA/210 (patent family annex) (July 2022)